# EUROPEAN PATENT SPECIFICATION

(11) **EP 3 993 677 B1**
(45) Date of publication and mention of the grant of the patent: **09.04.2025**
(21) Application number: 20735404.4
(22) Date of filing: 02.07.2020
(51) Int. Cl.: A47J 36/32, A47J 37/06

(54) **A COOKING DEVICE AND COOKING METHOD**
KOCHVORRICHTUNG UND KOCHVERFAHREN
DISPOSITIF ET PROCÉDÉ DE CUISSON

(30) Priority: 05.07.2019 EP 19184751
(43) Date of publication of application: 11.05.2022
(73) Proprietor: Versuni Holding B.V., 5656 AE Eindhoven (NL)
(72) Inventor: VAUPOT, Jan, 5656 AE Eindhoven (NL); SAUER, Stefan, Hans, 5656 AE Eindhoven (NL); MIKULA, Christian, 5656 AE Eindhoven (NL); EGGER, Christian, 5656 AE Eindhoven (NL)
(74) Representative: Vollering, Stefanus Franciscus Maria
(86) International application number: PCT/EP2020/068711
(87) International publication number: WO 2021/004899

(56) References cited:
- EP-A1- 2 901 903
- WO-A1-2019/033089
- WO-A2-2004/065916
- US-A1- 2003 127 451
- US-A1- 2018 324 908

## Description

### FIELD OF THE INVENTION

This invention relates to a cooking device and method which estimates the time required for a cooking process to be complete.

### BACKGROUND OF THE INVENTION

Current cooking devices are mostly controlled by user's selection of parameters such as time and temperature. Automatic selection of these cooking parameters would be convenient to the user and could also improve the cooking results by eliminating human error.

In order to control a cooking process accurately, it is necessary to know the key properties of the food during cooking. In particular, these key properties should allow the "doneness" to be measured or predicted during cooking. For example, the core temperature of a food item changes as the food is cooked. The core temperature of the food is a fundamental measurement of cooking doneness: for a certain type of food, it should be higher than a certain value to kill the harmful bacteria that cause foodborne illness but should not be too high in order to avoid overcooking. As a result, to ensure safety, foods are suggested to be cooked for an appropriate period of time and with a suitable internal temperature (range).

To determine if an item of food is cooked based on the core temperature, invasive methods are possible, but these will cause damage to the food when detecting core temperature. Non-invasive methods such as infrared sensing have limited penetration ability so are usually used to detect the surface temperature.

It has also been proposed to monitor a temperature of the cooking medium (rather than the actual food core temperature) over time and monitor a mass of an item to be cooked over time. The mass and temperature information can be used to provide an estimation of the current food core temperature. The cooking process can then be controlled in dependence on the predicted food core temperature.

This approach is disclosed in WO 2015/185404.

This approach, and other known approaches, provide a way to measure the "doneness" during cooking. However, they do not adapt well to changes in the cooking conditions.

For example, there is sometimes a need to shake or flip food items at a point partially through the cooking process to provide an overall desired cooking quality.

US 6 759 635 discloses the use of a temperature sensor to be placed in contact with the food, for determining the food status. The system provides timing for cooking of the two sides of a food item. US 2003/127451 A1 discloses a further cooking appliance capable of determining a cooking time.

However, the existing methods do not provide accurate adaptation of the cooking process in response to an intervention (such as shaking or flipping food items). For a cooking device with a food chamber, this intervention will alter the temperature and humidity in the cooking chamber, and thus provides a disruption to the cooking process. The effect of the disruption will depend on the duration of the intervention, as well as other factors, such as whether the cooking chamber is closed during the intervention or left open.

There is therefore a need for a monitoring approach which compensates for influence of such interventions on the cooking process, in an accurate way.

### SUMMARY OF THE INVENTION

The invention is based on the recognition that the process of providing an intervention, for example for shaking the food item, changes the requirement for further cooking, in particular the further cooking time required. Thus, depending on whether or not the intervention has taken place, e.g. a shaking action has been performed, the remaining time to cook may vary.

The invention is defined by the claims.

According to the invention, there is provided a cooking device, comprising:
a cooking chamber;
a food support for supporting the food to be cooked, for mounting in the cooking chamber;
a heating device for heating the cooking chamber;
a sensing arrangement for sensing cooking parameters over time;
a controller adapted to determine a required cooking time for the food to be cooked and hence the cooking process to be complete based on the time-evolution of the sensed cooking parameters; and
a sensor for sensing an intervention made by a user to the food during cooking and hence before the required cooking time has elapsed, wherein the sensed intervention is the opening of a lid or the removal of a drawer of the cooking device,
wherein the controller is adapted to re-calculate a remaining cooking time, based on the time-evolution of the sensed cooking parameters, in response to, and following, a sensed intervention.

This cooking device is adapted to determine a cooking time based on the evolution of cooking parameters, such as one or more of the cooking chamber temperature, the food core temperature, the humidity level, the food appearance etc. In this way, an indication may be provided of when cooking is complete, or an indication may be provided of how long remains in the cooking process, and/or automatic control of the cooking process may be provided. By sensing an intervention, such as shaking the food ingredients, the cooking time can be re-calculated to take account of that intervention. Thus, the indication remains accurate and/or the automated cooking process remains reliable.

The cooking device for example comprises an air fryer. In such a case, the support for example comprises a cooking basket. The basket has openings to allow a flow of heated air through and between food items contained as a stack in the basket. A typical example of the food to be cooked is potato chips. The cooking of potato chips is for example improved by performing a shaking operation during the cooking.

An output device is for example provided for giving one or both of :
an output instruction to a user to perform the intervention at a particular time; and
an indication of the remaining required cooking time.

The best time for an intervention is for example indicated to the user by a visible or audible output. The remaining cooking time may also be output to the user for example as a displayed count-down timer.

The controller is for example adapted to set the particular time as a time point between one third and two thirds of the way through the determined required cooking time. Thus, the time for an intervention may be a function of the determined cooking time. It may for example be approximately half way through the cooking process.

The particular time may be set based on the cooking parameters rather than as a function of the determined cooking time, but this may still corresponds to a time point between one third and two thirds of the way through the cooking process.

The intervention for example comprises shaking the food. This involves removing the support from the cooking chamber and shaking the contents. This enables the cooking process to achieve more uniform cooking of the outer surface of the food.

The sensing of an intervention may then comprise sensing opening of the chamber (for removal of the support) or actual removal of the support.

In one example, the sensing arrangement comprises a temperature sensor, for example a core temperature sensor probe. The required time for the intervention may be based on monitoring the temperature, and the temperature may also be used to estimate the remaining cooking time.

The temperature sensor may also function as the sensor for sensing an intervention based on a drop in temperature caused by the cooking chamber being opened.

In another example, the sensing arrangement comprises (or further comprises) a humidity sensor. The humidity changes over time as water content is evaporated during cooking, and this humidity-time function may be used to estimate the remaining cooking time, based on extrapolation of the function from an initial sampling period.

The controller may also be adapted to determine a required time for the intervention by monitoring (or additionally monitoring) the humidity, i.e. by setting a humidity level at which the intervention is appropriate. This required time will be a fraction of the way through the cooking process.

The humidity sensor may also function as the sensor for sensing an intervention, based on a drop in humidity caused by the cooking chamber being opened.

In another example, the sensing arrangement comprises (or further comprises) a weight sensor, and the controller is adapted to determine a required cooking time by monitoring (or additionally monitoring) the weight change. The weight also changes over time as water content is evaporated during cooking, and this weight-time function may be used to estimate the remaining cooking time, again based on extrapolation of sampled data.

The controller may be adapted to determine a required time for the intervention by monitoring (or additionally monitoring) the weight change. This required time may again correspond to a fraction of the way through the cooking process.

The weight sensor may in this case function as the sensor for sensing an intervention based on a drop in weight caused by the removal of the food from the cooking chamber during the intervention.

In another example, the sensing arrangement comprises (or further comprises) an image sensor, and wherein the controller is adapted to determine a required cooking time by monitoring (or additionally monitoring) an image of the food. The image changes color based on browning of the food during cooking.

The controller may be adapted to determine a required time for the intervention by monitoring (or additionally monitoring) the image of the food. This required time may again correspond to a fraction of the way through the cooking process.

The image sensor may in this case function as the sensor for sensing an intervention based on an image change caused by the removal of the food from the cooking chamber. For example, the image sensor may then capture an image of an internal wall of the cooking chamber instead of an image of the food on the support (e.g. in a basket), and this may correspond to a particular color change.

The required time for the intervention may instead simply be a set fraction, e.g. half, of the determined total cooking time, rather than a separate function of the temperature or humidity.

The invention also provides a cooking method, comprising the steps of claim 13.

The invention also provides a computer program comprising code means which is adapted, when run on a computer, to perform the steps of the method defined above using the device defined above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a known cooking device;
Figure 2 shows a cooking device according to an example of the invention as a modification to the cooking device of Figure 1;
Figure 3 shows an example of a user interface panel;
Figure 4 shows the dependency of the humidity (y-axis) with time during cooking;
Figure 5 shows the food weight (y-axis) over time during cooking; and
Figure 6 shows a cooking method.

### DETAILED DESCRIPTION OF THE EMBODIMENTS

The invention provides a cooking device for cooking food on a cooking support (e.g. in a basket) within a cooking chamber. Cooking parameters are sensed over time so that a required cooking time can be determined. An intervention made by a user to the food is sensed during cooking, such as shaking the basket. The required cooking time is then re-determined. In this way, the cooking time remains accurate both for an intervention or no intervention. This may for example enable the user to be given more accurate information about when the cooking process will be complete or it may enable automatic cooking to be controlled in a more reliable way.

The invention is for example of interest for application to an air fryer.

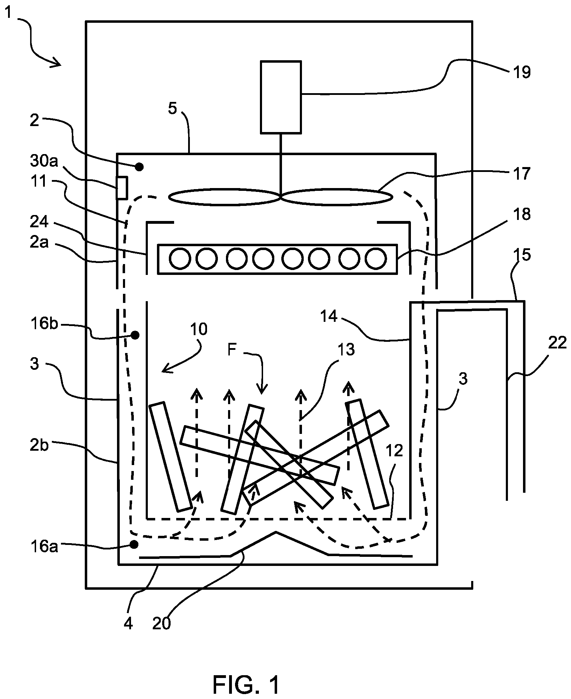

Figure 1 shows a known design of air-based fryer 1 in cross-sectional view. The air-based fryer 1 comprises a cooking chamber 2 with sidewalls 3, a bottom wall 4 and a top wall 5. A food support in the form of a basket 10 is disposed within the cooking chamber 2 to support food F to be cooked.

The basket 10 comprises an air-permeable bottom 12 and solid side walls 14. It has an open top, although a permeable cover plate may also be provided. The bottom 12 for example comprises a wire mesh which is a snap fit into the base of the basket within the side walls 14. The wire mesh is for example removable for cleaning, e.g. in a dishwasher, whereas the remainder of the basket is typically wiped clean by the user.

A mounting structure 15 is provided to detachably mount the basket 10 in the cooking chamber 2. The mounting structure 15 is designed to allow air to circulate all around the basket 10 in the mounted condition. The mounting structure 15 is designed such that in the mounted condition a bottom gap 16a is provided between the air-permeable bottom 12 and the bottom wall 4 of the cooking chamber 2. Furthermore, a lateral gap 16b is provided between the sidewalls 3 of the cooking chamber 2 and the perimeter of the air-permeable bottom 12. The bottom gap 16a and lateral gap 16b together form part of an air circulation channel.

The mounting structure 15 is designed to minimize obstruction of said air circulation channel.

In some embodiments, as illustrated in Figure 1, the mounting structure 15 comprises a handle, with which the basket 10 may be suspended from a sidewall 3 of the cooking chamber 2. The handle allows a user to easily remove the basket 10 from the cooking chamber 2.

The air-based fryer 1 further comprises an air circulation system comprising a fan 17, a motor 19 and an air heater 18 for circulating hot air in the cooking chamber 2. The air heater 18 may be disposed above the basket 10. In such a case, the air heater 18 may radiate heat directly to the food ingredients F in addition to heating the air in the cooking chamber 2.

The air circulation system may also be disposed above the basket 10 for example above the air heater 18.

The air circulation system is designed to pass hot air through the air-permeable bottom 12 of the basket 10 such that food F disposed thereon will be prepared by a through-streaming of hot air.

The air circulation system in this example is designed to draw air upward through the basket 10 as shown by arrows 13. The air may subsequently be passed along the air heater 18 to heat the air. The air heater 18 may be any appropriate heating source, such as an electric heater which can heat air to, for example, between roughly 100 °C and 250 °C by controlling the power supplied to the air heater.

As shown by arrows 11, the air circulation system is designed to pass hot air downward along an inner surface of the cooking chamber 2 and an outer surface of the basket 10. The bottom gap 16a and lateral gap 16b together form an air circulation channel for guiding the flow of hot air from the air circulation system to the bottom 12 of the basket 10.

The bottom wall 4 of the cooking chamber 2 may be flat or as shown in Figure 1 the bottom wall 4 may be provided with an air guide member 20 configured to direct the hot air flow towards and/or through the air-permeable bottom 12 of the basket 10.

The air guide member 20 may have a substantially conical, or frusto-conical outer contour or it may comprise ribs or arms. The air guide member 20 may be integrally formed in the bottom wall 4 of the cooking chamber or be provided as a separate insert.

In the example shown, a deflector plate 24 is provided in an upper part of the cooking chamber 2 above the basket 10, to further enclose a volume enclosed by the basket 10, and to help guiding air from the air circulation system around the basket into the air circulation channel formed by the bottom gap 16a and lateral gap 16b.

The cooking chamber 2 is shown with an upper section 2a and a lower section 2b, separable from each other to enable access into the cooking chamber 2. The upper section 2a thus functions as a cooking chamber lid. In some embodiments, the lower section 2b may be arranged stationary and the upper section 2a may be releasably or hingedly arranged, e.g. in the form of a lid. In some embodiments, the upper section 2a may be arranged stationary and the lower section 2b may be releasably arranged, e.g. in the form of a drawer. In such case, the lower section 2b may comprise a handle 22 to aid removal of the lower section 2b from the air-based fryer 1, as illustrated in Figure 1. The handles 15 and 22 couple together to define a single handle for the user to manipulate.

The air-based fryer 1 may comprise a vent (not shown), defining an air outlet from the cooking chamber 2 to outside the air-based fryer 1.

In use, a variety of food types may be prepared in the air-based fryer 1. In the case where the food is a bulk type of food, the individual food ingredients F may form a pile as illustrated in Figure 1, with the height, density and consequently the flow resistance being highest in the center of the pile and decreasing towards the periphery.

The bottom 12 of the basket 10 may for example be designed to have a flow resistance that reversely mirrors the flow resistance of the pile, so is lowest in the center and increases towards the periphery. Thus, the total flow resistance of the bottom 12 and pile together may be more or less constant over the entire cross section of the basket 10, resulting in a more homogeneous air flow through the basket 10 and, ultimately, in more homogeneous cooking results.

The heater is controlled by a controller (not shown in Figure 1) which is provided with temperature information from a temperature sensor 30a, so that there is feedback control of the heating process.

The invention may be applied to different types of cooking device, including the air fryer design of Figure 1, other air fryer designs, or indeed other types of cooking device.

The invention relates more generally to a cooking device having a cooking chamber, a food support for supporting the food to be cooked for mounting in the cooking chamber, and a heating device for heating the cooking chamber.

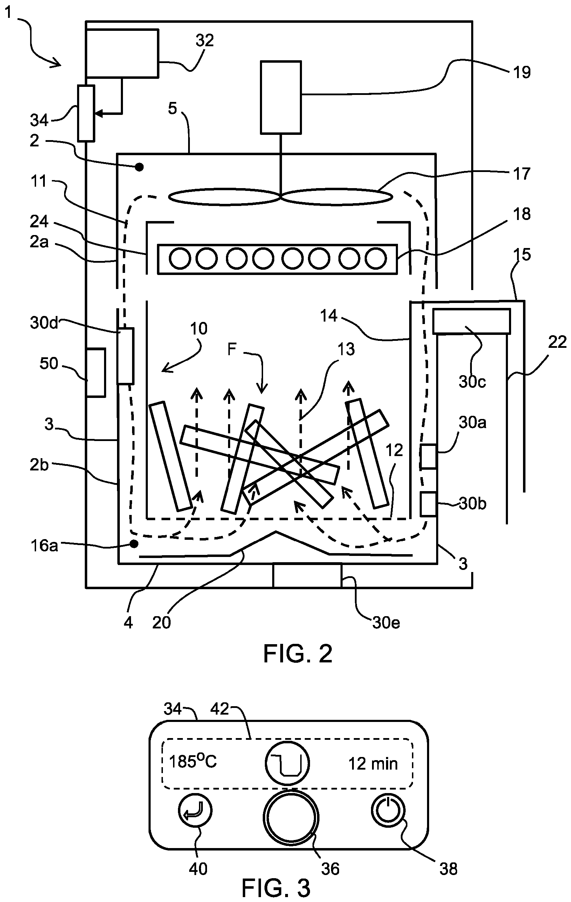

Figure 2 shows how the cooking device of Figure 1 is modified in accordance with the invention.

The cooking device further comprises a sensing arrangement for sensing cooking parameters over time. By way of example, the cooking parameters may comprise one or more of:
the cooking chamber temperature measured by a temperature sensor 30a in the cooking chamber (or a set of temperature sensors at multiple locations in the cooking chamber). Note that this may be the existing temperature sensor used for feedback control of the heating process, or there may be one or more additional dedicated sensors;
the humidity measured by a humidity sensor 30b in the cooking chamber (or a set of humidity sensors at multiple locations in the cooking chamber);
the food weight determined by a weight sensor 30c for weighing the basket;
the food color (or related appearance characteristics) monitored by an image sensor 30d;
the food weight determined by a weight sensor 30e for weighing the basket and the cooking chamber 2.

Note that any combination of sensors may be used. Any one may be used in isolation, or any combination of different sensing modalities may be used. Preferred combinations for example comprise temperature and weight monitoring, humidity and weight monitoring, humidity and temperature monitoring. Any combination of two, or three of the sensing modalities may be used, and all four may also be used.

A controller 32, typically implemented as a microprocessor, is adapted to determine a required cooking time for the food to be cooked based on the time-evolution of the one or more sensed cooking parameters. It receives the sensing signals from the sensing arrangement 30a, 30b, 30c, 30d, 30e, although these signal paths are not shown in Figure 2.

The function used to determine the cooking time will depend on the sensing modalities used, and may be based on machine learning or else using equation-based modelling of the cooking characteristics. Look up tables may instead be used. Essentially, any mapping between the sensed parameters over time and the estimated remaining cooking time may be used. The time-evolution of the parameters is for example monitored over a measurement time period. From the data obtained, a function can be fitted to the data, and this can be extrapolated to the future. The function may for example represent the food core temperature, and a target core temperature corresponds to the completion of the cooking process. The function may be a linear approximation or a higher order function. However, there may instead be a target humidity level, a target image characteristic (e.g. color) or other target condition which represents the completion of the cooking process.

The controller 32 controls a panel 34 which functions as a user interface for receiving user commands and displaying output to the user.

As shown in Figure 3, the panel 34 for example has a rotary control knob 36, an on/off button 38, a select button 40 (for selecting an option selected by the knob 36) and a display 42. The display for example has a region for displaying a cooking temperature setting, a time remaining of the cooking process, and a symbol to indicate that it is time to shake the food, i.e. remove the basket from the chamber and shake the contents, to achieve a better overall cooking process. Thus, an output instruction is provided to a user to perform the intervention at a particular time. This may be a visual as well as an audible output.

Of course other displayed content may be provided such as a food type (fish, meat, vegetables, chips). The user may input the type of food and also a fresh or frozen status.

Returning to Figure 2, the cooking device also has a sensor 50 for sensing an intervention made by a user to the food during cooking. This sensor detects opening of a lid or removal of a drawer. In either case, it senses when the basket is removed. The sensor is shown as a separate dedicated 50 sensor in Figure 2, but instead one or more of the sensors 30a, 30b, 30c, 30d may be used, as discussed further below.

The controller 32 re-determines the required cooking time, based on the time-evolution of the sensed cooking parameters, in response to, and following, a sensed intervention.

In this way, the cooking device determines a cooking time based on the evolution of cooking parameters, such as one or more of chamber temperature, food core temperature, humidity level, food weight, image characteristics, etc. By sensing an intervention, such as shaking the food ingredients, the cooking time can be re-calculated to take account of that intervention. Thus, the indication remains accurate and/or the automated cooking process remains reliable. The cooking time determination thus does not need to take place continuously, thereby saving time and processing. Instead, the remaining time determination takes place at discrete times, in particular at the start of the cooking process and on completion of one or more sensed interventions.

It is known that the time evolution of cooking parameters may be used to determine a remaining cooking time.

A first possible approach is to monitor the food core temperature, using a probe, over time. This is based on an analysis of the heat transfer function between the air in the cooking chamber and the food as the food heats and is cooked. For example, by monitoring the temperature at a set of time intervals, a function can be obtained by interpolation between those values, and the end cooking time can be obtained by extrapolation of that function. The cooking process is for example complete when the food core reaches a particular temperature.

A system based on this approach is for example described in EP 1 835 371 to which reference is made. However, this requires a temperature probe to be inserted into a part of the food.

An alternative is to monitor one or more cooking chamber temperatures, and to estimate the core temperature from these external temperature measurements. By way of example, the additional monitoring of food weight may enable an accurate estimation to take place. The weight sensor 30c for example monitors the weight of the basket and the food to be cooked, or even the whole cooking appliance (in which case it can be external to the cooking chamber). The weight sensor 30c may be implemented as a pressure sensor.

The controller 34 processes the weight sensor and temperature sensor information to provide a prediction of the food core temperature and to determine the cooking time by extrapolating the predicted food core temperature.

Core temperature prediction can in this way be achieved using parameters that can be easily obtained in the cooking system. There may be other parameters monitored, including humidity. For example, the parameters may comprise a combination of air temperature, or air temperature rate of change, a surface temperature of food, a rate of change of the surface temperature of food, weight of food, weight loss rate of food, moisture content of food, the rate of change of moisture content, the humidity of the surrounding air, the rate of change of humidity etc.

These parameters can be detected, determined or estimated without invasion or destruction of food.

The relationship between the core temperature and the full set of monitored parameters is first established, then the core temperature can be predicted by that relationship. The predicted core temperature can then be employed to judge the cooking status of the food and as a result can be used to control the process and derive the remaining cooking time.

This approach is described in more detail in WO 2015/185404.

It is also known to determine a level of doneness of food based (only) on humidity sensing, as described in EP 0 701 387. The moisture content in the cooking cavity evolves over time. EP 0 701 387 discloses the use of a neural network to learn how the humidity function maps to the doneness of the food.

This invention may use any of these known approaches, or a combination of approaches to provide an estimation of a level of doneness of a food, and to predict the future function of doneness over time, so that an estimate may be made of the remaining cooking time.

The estimation may make use of any combination of chamber temperature sensing, food surface temperature sensing, food core temperature sensing with a probe, chamber humidity sensing, food weight sensing and food image analysis.

This invention does not relate specifically to the estimation of doneness or prediction of future doneness since known approaches may be used as have been identified and discussed above.

A first aspect is to provide an indication to a user of when to perform an intervention, typically a shaking function for the basket. A particular time is set at which user intervention is needed, and an output is generated for the user. This may for example be half way through the cooking time, as determined from the estimation of the total cooking time. More generally, the intervention time may be a time point between one third and two thirds of the way through the determined required cooking time. The intervention may be a set point in time through the cooking process, or it may be based on the monitoring of the cooking parameters, but this will still generally result in a time point between one third and two thirds of the way through the cooking process.

A second aspect is that the intervention itself is sensed by the sensor 50 (or one or more of the sensors 30a, 30b, 30c, 30d as described below). The intervention sensed may be the opening of the chamber (for removal of the basket or manipulation of the food on the support) or actual removal of the basket (for shaking).

The intervention time does not need to be a particular fraction of the cooking time, as mentioned above.

As one example, if the sensing (for cooking time determination) includes humidity sensing, the time for the intervention may be set as the point in time at which the humidity reaches a certain level. This may be just before the food starts to lose water rapidly.

By opening the cooking chamber (e.g. drawer or lid), the humidity in the cooking chamber drops sharply. The humidity monitoring itself may thus be used as the sensing mechanism for sensing the intervention.

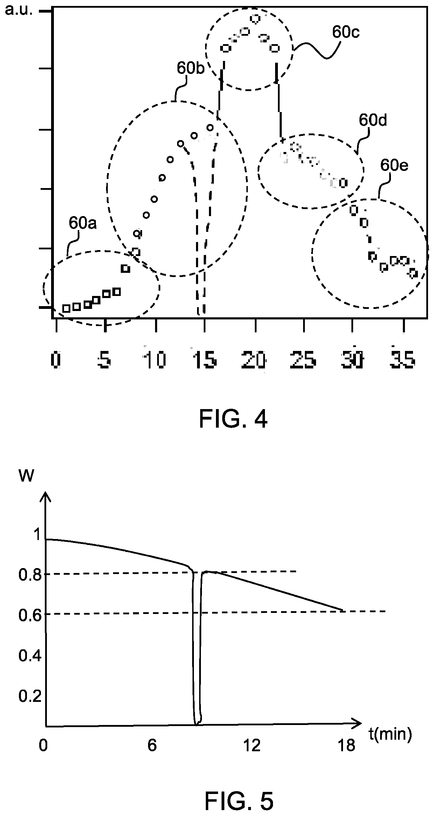

Figure 4 shows the dependency of the humidity (y-axis in arbitrary units) with time (illustrated as number of 30 second cooking cycles, x-axis). The dotted line shows the effect of an intervention at about 12 cycles. The regions 60a to 60e represent different doneness phases during the cooking process. The humidity threshold is at the end of a second phase 60b.

By way of example the cooking phases may comprise:
60a heating of water on the food surface;
60b the start of evaporation of the food surface water;
60c the completion of surface water evaporation;
60d evaporation of water from food interior; and
60e weak evaporation due the completed drying of the food.

As another example, if the sensing (for cooking time determination) includes weight sensing, the time for the intervention may be set as a point in time at which a certain weight loss, e.g. 20%, has taken place. The weight may be monitored over time for this purpose.

By lifting the basket, the sensed weight drops to zero (if the basket weight is measured by sensor 30c) or drops by a generally known step (if the basket and cooking chamber weight is measured by sensor 30e). The weight monitoring itself may thus be used as the sensing mechanism for sensing the intervention.

Figure 5 shows the food weight (y-axis, normalized to a starting weight of 1) over time (x-axis, minutes). It shows the weight dropping to zero at 9 minutes as a result of an intervention, when the weight has dropped to 80%. This is roughly half way through the cooking process.

As another example, if the sensing (for cooking time determination) includes image sensing, for example color monitoring, the time for the intervention may be set as a point in time at which a certain color change takes place, or a target color is reached.

By lifting the basket, the sensed color changes to the facing wall of the cooking chamber rather the food item. The image sensing itself may thus be used as the sensing mechanism for sensing the intervention.

If the sensing (for cooking time determination) includes chamber temperature monitoring, the temperature sensing may be used as the sensing mechanism for sensing the intervention, based on a sudden drop in temperature, i.e. towards the ambient temperature.

Of course, the intervention may be sensed on dedicated sensors. For example, the sensor 50 may be a switch or proximity sensor.

Typically, a single intervention is sufficient, but the system may conceivably also advise the need for multiple interventions.

The time for an intervention is thus generally a function of the determined cooking time or a function of cooking parameters that are being monitored.

As explained above, when an intervention is sensed, the remaining cooking time is re-calculated. In this way, the doneness estimation does not need to be performed continuously. Instead, a first calculation is made, at the beginning of the cooking process, of the remaining cooking time. This calculation for example takes 30 seconds.

There may be user input relating to the type of food (e.g. fresh or frozen) which will influence the estimation. The food weight (e.g. an actual weight or just an indication of basket half full or full) may also be input to the cooking device, if there is not a weight sensor as part of the system.

A second calculation is then only performed once an intervention is detected.

The intervention is likely to change the required cooking time particularly for a cooking device with a small cooking chamber, not much larger than the food support. An air fryer is an example of such a cooking device. It heats up quickly and has a small chamber. By way of example, the time for cooking fries may jump from 20 minutes to 25 minutes as a result of the intervention, in particular the as a result of the cooling of the cooking chamber which may take place for the 1 to 2 minutes while the basket is being shaken. By way of example, the cooking time may be extended by between 3 and 10 minutes, or by 10% to 30% of the overall cooking time.

However, the cooking time adjustment is not simply an added fixed time. Instead, it is based on a re-calculation of the remaining cooking time, for example requiring a further 30 second sampling of the sensed data to extrapolate a new point in time at which the cooking is complete.

If there are second or further interventions (whether instructed by the device or just sensed by the device) the remaining cooking time can again be re-calculated.

If an intervention is recommended by the cooking device but not sensed (e.g. the user had to go out so couldn't perform the ideal intervention), the cooking time does not need to be re-calculated.

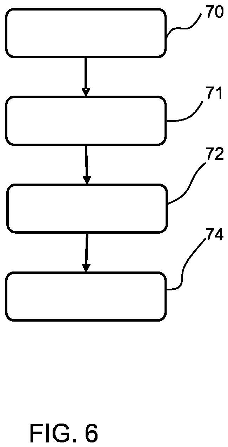

Figure 6 shows a cooking method, comprising:
In step 70, a required cooking time is determined for food to be cooked based on the evolution of sensed cooking parameters over time;
in step 72, an intervention made by a user to the food during cooking is sensed; and
in step 74, the required cooking time is re-determined, based on the evolution of sensed cooking parameters over time, in response to a sensed intervention.

The required cooking time may be output to a user, and it may also be used to automatically control the cooking process. The method may further comprise, in step 71, instructing the user to perform the intervention by a visual and/or audible output.

The example above is based on shaking the food item, such as shaking chips in a basket to provide better all-around cooking. However, the intervention may instead comprise flipping or turning the food item. For example, there may be food items which can be cooked on one side or on both sides according to a user's preference, and different cooking times may then be appropriate. The length of time taken by the user will also influence the required remaining cooking time. The food item may be mounted on a support such as a griddle or plate rather than being contained within a basket.

Thus, the type of intervention may depend on the type of cooking device. The device of the invention generally detects an intervention (and it may also provide an indication of when to perform the intervention) and then re-calculates cooking times, using an interpolation/extrapolation approach based on sensed cooking parameters.

The method may be implemented in part by software running on the controller. The system makes use of a controller for implementing the algorithm and for controlling the user interface and the cooking cycle. Components that may be employed for the controller include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform at the required functions. Various storage media may be fixed within a processor or controller or may be transportable, such that the one or more programs stored thereon can be loaded into a processor or controller.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems. The term "adapted to" is used in the claims and description is intended to be equivalent to the term "configured to". Any reference signs in the claims should not be construed as limiting the scope.

## Claims

1. A cooking device (1), comprising:
a cooking chamber (2);
a food support (10) for supporting the food to be cooked, for mounting in the cooking chamber;
a heating device (18) for heating the cooking chamber;
a sensing arrangement (30a, 30b, 30c, 30d, 30e) for sensing cooking parameters over time;
a controller (32) adapted to determine a required cooking time for the food to be cooked and hence the cooking process to be complete based on the time-evolution of the sensed cooking parameters; the cooking device (1) being **characterized by**
a sensor (50) for sensing an intervention made by a user to the food during cooking and hence before the required cooking time has elapsed, wherein the sensed intervention is opening of a lid or removal of a drawer of the cooking device;
wherein the controller (32) is adapted to re-calculate a remaining cooking time, based on the time-evolution of the sensed cooking parameters, in response to, and following, the sensed intervention.

2. A cooking device as claimed in claim 1, wherein the food is to be cooked by a cooking procedure which includes shaking the food during the cooking process, wherein the sensed intervention is indicative of shaking of the food.

3. A cooking device as claimed in claim 1 or 2 comprising an air fryer.

4. A cooking device as claimed in any one of claims 1 to 3, comprising an output device (34) for providing one or both of:
an output instruction to a user to perform the intervention at a particular time; and
an indication of the remaining cooking time.

5. A cooking device as claimed in claim 4, wherein the controller (32) is adapted to set the particular time as a time point between one third and two thirds of the way through the determined required cooking time.

6. A cooking device as claimed in any one of claims 1 to 5, wherein the sensing arrangement comprises a temperature sensor (30a) and/or a humidity sensor (30b).

7. A cooking device as claimed in claim 6, wherein the controller is adapted to determine a required time for the intervention by monitoring the temperature, and optionally wherein the temperature sensor functions as the sensor for sensing an intervention based on a drop in temperature caused by the cooking chamber being opened.

8. A cooking device as claimed in claim 6 or 7, wherein the controller is adapted to determine a required time for the intervention by monitoring the humidity, and optionally wherein the humidity sensor functions as the sensor for sensing an intervention based on a drop in humidity caused by the cooking chamber being opened.

9. A cooking device as claimed in any one of claims 1 to 8, wherein the sensing arrangement comprising a weight sensor (30c, 30e), and wherein the controller is adapted to determine a required cooking time by monitoring the weight change.

10. A cooking device as claimed in claim 9, wherein the controller is adapted to determine a required time for the intervention by monitoring the weight change, and optionally wherein the weight sensor functions as the sensor for sensing an intervention based on a drop in weight caused by the removal of the food from the cooking chamber during the intervention.

11. A cooking device as claimed in any one of claims 1 to 10, wherein the sensing arrangement comprises an image sensor (30d), and wherein the controller is adapted to determine a required cooking time by monitoring an image of the food.

12. A cooking device as claimed in claim 11, wherein the controller is adapted to determine a required time for the intervention by monitoring the image of the food and optionally wherein the image sensor functions as the sensor for sensing an intervention based on an image change caused by the removal of the food from the cooking chamber.

13. A cooking method, comprising:
(70) determining a required cooking time for food to be cooked, and hence the cooking method to be complete, based on the evolution of sensed cooking parameters over time;
(72) sensing an intervention made by a user to the food during cooking and hence before the required cooking time has elapsed, the sensed intervention is indicative of opening of a lid or removal of a drawer of the cooking device; and
(74) re-calculating a remaining cooking time, based on the evolution of sensed cooking parameters over time, in response to the sensed intervention.

14. A method as claimed in claim 13, further comprising:
(71) determining a required time for the intervention and outputting advisory information to a user.

15. A computer program comprising code means which is adapted, when run on the cooking device as claimed in any one of claims 1 to 12, to perform the steps of claim 13 or 14.

## Patentansprüche

1. Kochvorrichtung (1), umfassend:
eine Kochkammer (2);
einen Nahrungsmittelträger (10) zum Tragen des Nahrungsmittels zum Anbringen in der Kochkammer;
eine Heizvorrichtung (18) zum Erhitzen der Kochkammer;
eine Sensoranordnung (30a, 30b, 30c, 30d, 30e) zum Abtasten von Kochparametern im Zeitverlauf;
eine Steuereinheit (32), die dazu angepasst ist, eine erforderliche Kochzeit für das zu kochende Nahrungsmittel und daher den zu vollendenden Kochprozess basierend auf der Zeitentwicklung der abgetasteten Kochparameter zu bestimmen; wobei die Kochvorrichtung (1) **gekennzeichnet ist durch**
einen Sensor (50) zum Abtasten eines durch einen Benutzer erfolgenden Eingriffs an dem Nahrungsmittel während des Kochens und daher bevor die erforderliche Kochzeit abgelaufen ist, wobei der abgetastete Eingriff Öffnen eines Deckels oder das Herausziehen einer Schublade der Kochvorrichtung ist;
wobei die Steuereinheit (32) dazu angepasst ist, als Reaktion auf den abgetasteten Eingriff und im Anschluss daran, basierend auf der Zeitentwicklung der abgetasteten Kochparameter eine verbleibende Kochzeit neu zu berechnen.

2. Kochvorrichtung nach Anspruch 1, wobei das Nahrungsmittel durch eine Kochprozedur gekocht werden soll, welches das Schütteln des Nahrungsmittels während des Kochprozesses beinhaltet, wobei der abgetastete Eingriff bezeichnend für ein Schütteln des Nahrungsmittels ist.

3. Kochvorrichtung nach Anspruch 1 oder 2, das eine Heißluftfritteuse umfasst.

4. Kochvorrichtung nach einem der Ansprüche 1 bis 3, die eine Ausgabevorrichtung (34) zum Bereitstellen eines oder beider von Folgenden umfasst:
einer Ausgabeanweisung an einen Benutzer, um den Eingriff zu einer bestimmten Zeit durchzuführen; und
einer Angabe der verbleibenden Kochzeit.

5. Kochvorrichtung nach Anspruch 4, wobei die Steuereinheit (32) dazu angepasst ist, die bestimmte Zeit als einen Zeitpunkt zwischen einem Drittel und zwei Dritteln des Weges durch die bestimmte erforderliche Kochzeit einzustellen.

6. Kochvorrichtung nach einem der Ansprüche 1 bis 5, wobei die Sensoranordnung einen Temperatursensor (30a) und/oder einen Feuchtigkeitssensor (30b) umfasst.

7. Kochvorrichtung nach Anspruch 6, wobei die Steuereinheit dazu angepasst ist, durch Überwachen der Temperatur eine erforderliche Zeit für den Eingriff zu bestimmen, und wobei der Temperatursensor optional als Sensor zum Abtasten eines Eingriffs basierend auf einem Temperaturabfall fungiert, der dadurch verursacht wird, dass die Kochkammer geöffnet wird.

8. Kochvorrichtung nach Anspruch 6 oder 7, wobei die Steuereinheit dazu angepasst ist, durch Überwachen der Feuchtigkeit eine erforderliche Zeit für den Eingriff zu bestimmen, und wobei der Feuchtigkeitssensor optional als Sensor zum Abtasten eines Eingriffs basierend auf einem Feuchtigkeitsabfall fungiert, der dadurch verursacht wird, dass die Kochkammer geöffnet wird.

9. Kochvorrichtung nach einem der Ansprüche 1 bis 8, wobei die Sensoranordnung einen Gewichtssensor (30c, 30e) umfasst und wobei die Steuereinheit dazu angepasst ist, durch Überwachen der Gewichtsänderung eine erforderliche Kochzeit zu bestimmen.

10. Kochvorrichtung nach Anspruch 9, wobei die Steuereinheit dazu angepasst ist, durch Überwachen der Gewichtsänderung eine erforderliche Zeit für den Eingriff zu bestimmen, und wobei der Gewichtssensor optional als Sensor zum Abtasten eines Eingriffs basierend auf einem Gewichtsabfall fungiert, der durch Entfernen des Nahrungsmittels aus der Kochkammer während des Eingriffs verursacht wird.

11. Kochvorrichtung nach einem der Ansprüche 1 bis 10, wobei die Sensoranordnung einen Bildsensor (30d) umfasst, und wobei die Steuereinheit dazu angepasst ist, eine erforderliche Kochzeit durch Überwachen eines Bildes des Nahrungsmittels zu bestimmen.

12. Kochvorrichtung nach Anspruch 11, wobei die Steuereinheit dazu angepasst ist, durch Überwachen des Bildes des Nahrungsmittels eine erforderliche Zeit für den Eingriff zu bestimmen, und wobei der Bildsensor optional als Sensor zum Abtasten eines Eingriffs basierend auf einer Bildänderung fungiert, die durch das Entfernen des Nahrungsmittels aus der Kochkammer verursacht wird.

13. Kochverfahren, umfassend:
(70) Bestimmen einer erforderlichen Kochzeit für ein zu kochendes Nahrungsmittel und daher des zu vollendenden Kochverfahrens basierend auf der Entwicklung abgetasteter Kochparameter im Zeitverlauf;
(72) Abtasten eines durch einen Benutzer erfolgenden Eingriffs an dem Nahrungsmittel während des Kochens und daher bevor die erforderliche Kochzeit abgelaufen ist, wobei der abgetastete Eingriff bezeichnend für ein Öffnen eines Deckels oder das Herausziehen einer Schublade der Kochvorrichtung ist; und
(74) Neuberechnen einer verbleibenden Kochzeit basierend auf der Entwicklung abgetasteter Kochparameter im Zeitverlauf, als Reaktion auf den abgetasteten Eingriff.

14. Verfahren nach Anspruch 13, weiter umfassend:
(71) Bestimmen einer erforderlichen Zeit für den Eingriff und Ausgeben von Hinweisinformationen an einen Benutzer.

15. Computerprogramm, das Codemittel umfasst, die, wenn sie in der Kochvorrichtung nach einem der Ansprüche 1 bis 12 laufen, dazu angepasst sind, die Schritte nach Anspruch 13 oder 14 durchzuführen.

## Revendications

1. Dispositif de cuisson (1) comprenant :
une chambre de cuisson (2) ;
un support alimentaire (10) pour supporter les aliments à cuire, pour être monté dans la chambre de cuisson ;
un dispositif chauffant (18) pour chauffer la chambre de cuisson ;
un agencement de détection (30a, 30b, 30c, 30d, 30e) pour détecter des paramètres de cuisson au fil du temps ;
un dispositif de commande (32) adapté pour déterminer un temps de cuisson requis pour que les aliments soient cuits et, donc, que le processus de cuisson soit terminé sur la base de l'évolution temporelle des paramètres de cuisson détectés ; le dispositif de cuisson (1) étant **caractérisé par**
un capteur (50) pour détecter une intervention réalisée par un utilisateur sur l'aliment pendant la cuisson et, donc, avant que le temps de cuisson requis ne soit écoulé, dans lequel l'intervention détectée est l'ouverture d'un couvercle ou le retrait d'un tiroir du dispositif de cuisson ;
dans lequel le dispositif de commande (32) est adapté pour recalculer un temps de cuisson restant, sur la base de l'évolution temporelle des paramètres de cuisson détectés, à la suite de, et après, l'intervention détectée.

2. Dispositif de cuisson selon la revendication 1, dans lequel les aliments doivent être cuits par une procédure de cuisson qui inclut le secouage des aliments pendant le processus de cuisson, dans lequel l'intervention détectée est indicative du secouage des aliments.

3. Dispositif de cuisson selon la revendication 1 ou 2 comprenant une friteuse à air.

4. Dispositif de cuisson selon l'une quelconque des revendications 1 à 3, comprenant un dispositif de sortie (34) pour fournir l'un ou les deux :
d'une instruction de sortie à un utilisateur pour effectuer l'intervention à un moment particulier ; et
d'une indication du temps de cuisson restant.

5. Dispositif de cuisson selon la revendication 4, dans lequel le dispositif de commande (32) est adapté pour régler le moment particulier comme un point temporel entre un tiers et deux tiers du temps de cuisson requis déterminé.

6. Dispositif de cuisson selon l'une quelconque des revendications 1 à 5, dans lequel l'agencement de détection comprend un capteur de température (30a) et/ou un capteur d'humidité (30b).

7. Dispositif de cuisson selon la revendication 6, dans lequel le dispositif de commande est adapté pour déterminer un temps requis pour l'intervention en surveillant la température et, facultativement, dans lequel le capteur de température fonctionne comme capteur pour détecter une intervention sur la base d'une baisse de température provoquée par l'ouverture de la chambre de cuisson.

8. Dispositif de cuisson selon la revendication 6 ou 7, dans lequel le dispositif de commande est adapté pour déterminer un temps requis pour l'intervention en surveillant l'humidité et, facultativement, dans lequel le capteur d'humidité fonctionne comme capteur pour détecter une intervention sur la base d'une baisse d'humidité provoquée par l'ouverture de la chambre de cuisson.

9. Dispositif de cuisson selon l'une quelconque des revendications 1 à 8, dans lequel l'agencement de détection comprend un capteur de poids (30c, 30e) et dans lequel le dispositif de commande est adapté pour déterminer un temps de cuisson requis en surveillant le changement de poids.

10. Dispositif de cuisson selon la revendication 9, dans lequel le dispositif de commande est adapté pour déterminer un temps requis pour l'intervention en surveillant le changement de poids et, facultativement, dans lequel le capteur de poids fonctionne comme capteur pour détecter une intervention sur la base d'une baisse de poids provoquée par le retrait des aliments de la chambre de cuisson pendant l'intervention.

11. Dispositif de cuisson selon l'une quelconque des revendications 1 à 10, dans lequel l'agencement de détection comprend un capteur d'image (30d) et dans lequel le dispositif de commande est adapté pour déterminer un temps de cuisson requis en surveillant une image de l'aliment.

12. Dispositif de cuisson selon la revendication 11, dans lequel le dispositif de commande est adapté pour déterminer un temps requis pour l'intervention en surveillant l'image de l'aliment et, facultativement, dans lequel le capteur d'image fonctionne comme capteur pour détecter une intervention sur la base d'un changement d'image provoqué par le retrait de l'aliment de la chambre de cuisson.

13. Procédé de cuisson comprenant :
(70) la détermination d'un temps de cuisson requis pour que les aliments soient cuits et, donc, le procédé de cuisson soit terminé, sur la base de l'évolution de paramètres de cuisson détectés au fil du temps ;
(72) la détection d'une intervention réalisée par un utilisateur sur l'aliment pendant la cuisson et, donc, avant que le temps de cuisson requis ne soit écoulé, l'intervention détectée est indicative de l'ouverture d'un couvercle ou du retrait d'un tiroir du dispositif de cuisson ; et
(74) le recalcul d'un temps de cuisson restant, sur la base de l'évolution de paramètres de cuisson détectés au fil du temps, à la suite de l'intervention détectée.

14. Procédé selon la revendication 13, comprenant en outre :
(71) la détermination d'un temps requis pour l'intervention et la fourniture d'informations consultatives à un utilisateur.

15. Programme informatique comprenant des moyens de code qui sont adaptés, lorsqu'ils sont exécutés sur le dispositif de cuisson selon l'une quelconque des revendications 1 à 12, pour effectuer les étapes de la revendication 13 ou 14.
